# EUROPEAN PATENT APPLICATION

(11) **EP 4 697 590 A1**
(43) Date of publication of application: **18.02.2026**
(21) Application number: 25192671.3
(22) Date of filing: 30.07.2025
(51) Int. Cl.: H02S 20/32, F24S 50/20

(54) **SOLAR TRACKER SUPPORT**

(30) Priority: 05.08.2024 US 202463679248 P; 28.07.2025 US 202519282180
(71) Applicant: DS2.0, LLC, Portland, TN 37148 (US)
(72) Inventor: SOLON, Dean, Gallatin, TN 37066 (US)
(74) Representative: Fish & Richardson P.C.

(57) **Abstract**

The present disclosure involves systems and an apparatus supporting an array of solar panels, the system including a base that has a first end and a second end, a first linking member coupled to the first end by a first revolute joint, a second linking member coupled to the second end by a second revolute joint, a T-linkage connected to the first and second linking members by third and fourth revolute joints respectively, and a panel support affixed to the T-linkage and configured to receive and support a solar panel.

## Description

### CROSS-REFERENCE TO RELATED APPLICATION

This application claims priority to U.S. Provisional Application No. 63/679,248, filed on August 5, 2024. The disclosure of the prior application is considered part of and is incorporated by reference in the disclosure of this application.

### BACKGROUND

Ground-mounted photovoltaic solar panel arrays are often installed on racking systems using pile foundations. The solar panels ("panels") in the array can be configured to tilt in order to track the sun and increase the electrical power generated by the solar panels. This solar tracking can be implemented using a shaft or series of coupled shafts that rotate the panels.

### SUMMARY

The present disclosure involves systems, and an apparatus supporting an array of solar panels, the system including a base that has a first end and a second end, a first linking member coupled to the first end by a first revolute joint, a second linking member coupled to the second end by a second revolute joint, a T-linkage connected to the first and second linking members by third and fourth revolute joints respectively, and a panel support affixed to the T-linkage and configured to receive and support a solar panel.

Implementations can optionally include one or more of the following features.

In some instances, the system includes an actuator shaft coupled to the T-linkage by a fifth revolute joint, the actuator shaft configured to translate relative to the base. Translating the actuator shaft can pivot the T-linkage causing the panel support to tilt.

In some instances, the actuator shaft is coupled to an actuator configured to translate the actuator shaft relative to the base.

In some instances, tilting the support panel causes a center point of the support panel to move away from the base.

In some instances, the revolute joints are pin joints, and the revolute joints each include a bearing.

In some instances, the first and second linking members and T-linkage are formed of steel.

In some instances, the base is affixed to the ground.

In some instances, one or more cross members are included and configured to provide lateral rigidity.

The configuration of the disclosed system is advantageous, for example, because it enables solar tracking of panels without using a large central rotating axle or shaft. Because the disclosed system has more geometric structural strength, less material such as steel or iron is necessary and therefore the overall weight and cost of the system is reduced. Further, the weight of solar panels can be distributed over a broader area than a single central axle or shaft. This reduces panel flexion, increasing panel life, and further reducing maintenance and upkeep. An additional advantage is that the entire structure can be built closer to the ground, reducing wind load and overall structural requirements.

The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGS. 1A and 1B depict side views of an example of a solar tracking support.
FIG. 2 illustrates a front view of solar tracking support.
FIG. 3 illustrates an array of solar tracking supports operated by a single actuator shaft.
FIG. 4 illustrates an example key block and system for transferring linear motion to a height adjustable actuator shaft.

### DETAILED DESCRIPTION

This disclosure describes implementations of a solar tracker racking structure that uses a linked member support system to achieve 1-dimensional tracking motion, as opposed to the conventional horizontal single-axis tracker (HSAT) featuring a central torque tube rotating about its own or proximal axis. A T-link and two I-links are connected by revolute joints to a base, which creates a four-bar linkage that enables the T-link to pivot. A panel support is affixed to the T-link and the solar panel can be mounted to that support. A revolute joint can also be referred to as a pin joint or a hinge joint and provides single axis rotation functionality of the members connected by the revolute joint.

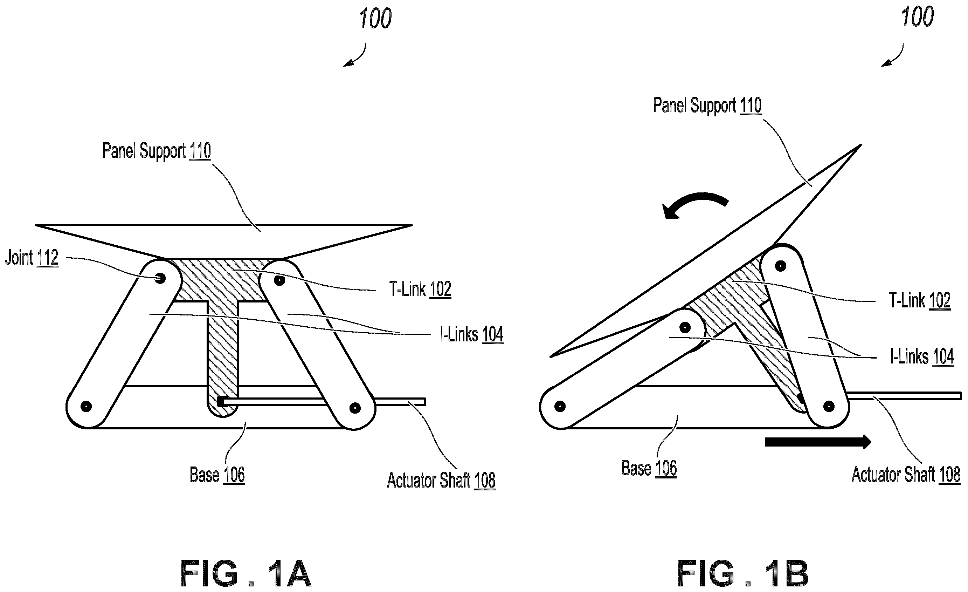

Turning to FIGS. 1A and 1B, side views of an example of a solar tracking support 100 are shown. Support 100 includes T-link 102 that is coupled to I-links 104, which are coupled to base 106. Each link is coupled using joints 112 (e.g., revolute joints), which can allow rotation between the respective links they couple. Actuator shaft 108 is coupled to the T-link 102 and can cause the support 100 to pivot as shown in FIG. 1B.

T-link 102 is a link with a lever arm extending down to be coupled to actuator shaft 108. While illustrated as T-shaped, any suitable shape can be used. For example, the lever arm can extend at an angle, forming a "y" shape for T-link 102, or other suitable shape. T-link 102 can be formed of any suitable material including aluminum, aluminum alloy, steel, steel alloy (e.g., stainless steel, carbon steel, etc.), iron, composites such as carbon fiber or fiber cement, resin-based fiberglass composite, plastic or polymer material, among other things. Further, the lever arm need not extend from the center of the T-link, but can extend from one end, or both ends.

I-links 104 support T-link 102 and provide pivot action relative to the base 106. The ratio of the length between I-links 104 and T-link 102 will determine the amount of available pivot, or travel of the solar tracker. In some implementations, this can be adjusted based on the desired application. For example, in instances where the support 100 will tilt primarily in a single direction, I-links 104 may have different lengths, with the longer I-link 104 located on the high side. The high side can be the side away from which the tracking panel tilts, such that the associated I-link 104 is higher than the other I-link 104. For example, in FIG. 1B the right I-link could be considered the high side, and the left I-link 104 could be considered the low side. In some implementations, the I-links 104 include two ends and a center portion, for example, each end can be the outer third of the I-link as measured from the center, or the outer fourth, etc.

Base 106 can be a foundation or sled upon which the I-links 104 are coupled. In other words, the base 106 can be a support structure that is configured to be stationary with respect to the rest of the support 100. In general base 106 is fixed to the ground (e.g., with spikes, or by the weight of support 100). Base 106 and I-links 104 can be formed of a material similar to or different from T-link 102, such as steel, steel alloy (e.g., stainless steel, carbon steel, etc.), iron, composites such as carbon fiber or fiber cement, as well as plastic or polymer material. In some implementations, the base 106 is cement or concrete.

The actuator shaft 108 is a link to which an actuator can be attached. The actuator shaft 108 translates left or right in the illustrated example causing T-link 102 to tilt. The actuator shaft 108 can be operated by any suitable actuator, including a linear actuator (e.g., hydraulic cylinder, ball and screw actuator, or other device), rotary actuator (e.g., motor, flywheel, etc.) or other device.

The links (102, 104, 106) and actuator shaft 108 are coupled together by joints 112. Joints 112 can be revolute joints or other mobile joints. In other words, joints 112 can provide at least one degree of free rotation between the bodies they connect. Joints can be, for example, one-way bearings, pin joints, or hinge joints. In some implementations, joints 112 can include two or more degrees of freedom, and can be for example, cylindrical joints, or universal joints. For example, actuator shaft 108 can be connected to T-link 102 via a universal joint, while T-link 102 and I-links 104 are connected using a bearing in a pin joint.

Panel support 110 can be rigidly connected to T-link 102 and can include necessary components for mounting a solar panel. This can be sockets, eyes, pins, or holes that are configured to mate with mounting hardware for a solar panel. In some implementations, the panel support 110 extends to the dimensions of the solar panel to distribute the provided support throughout the panel, thereby reducing panel flex and providing a stronger support.

It should be noted that, based on the geometry and relative lengths of T-link 102 and I-links 104, tilting the panel support 110 can cause it to lift up away from base 106. For example, a center-point of the panel support 110 can be at its lowest when the panel support 110 is in a horizontal position (e.g., FIG. 1A), and be "lifted" when the panel support 110 is tilted as in FIG. 1B. This enables the solar panels to be lower to the ground in some positions, reducing overall structural material requirements certain wind loads. Additionally, the panel can lay flat on or near the ground, requiring minimal ballast or anchoring to remain secure. For example, in some implementations, the base 106 need not include ground penetrating foundation, because the overall system rests close enough to the ground that it can remain sufficiently stable without them.

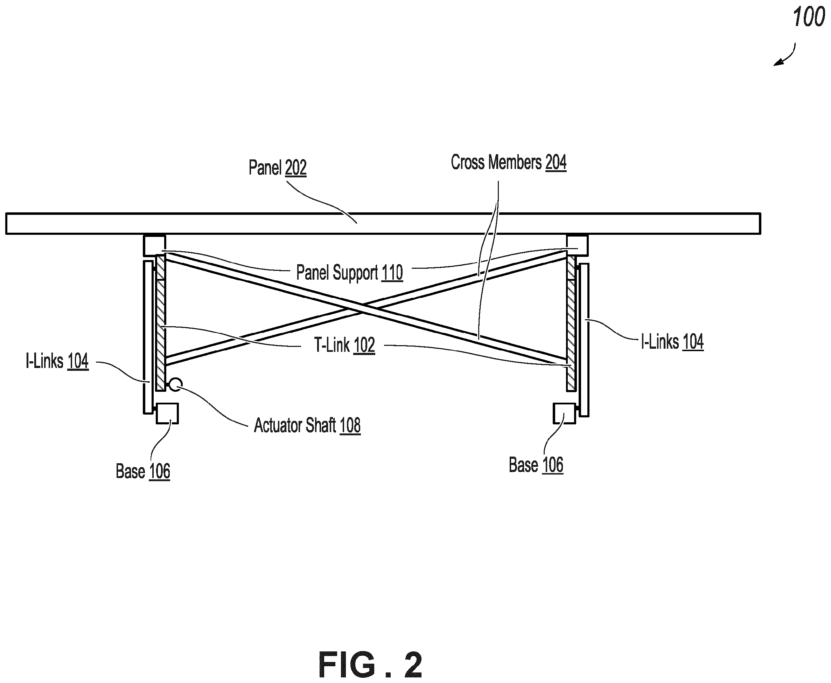

FIG. 2 illustrates a front view of solar tracking support 100 with the panel 202 in the flat, or neutral, position. The illustrated support 100 includes two T-links 102, four I-links 104, two bases 106, and a single panel support 110 with a cross member 204.

Panel 202 can be a solar panel formed of multiple solar modules, which themselves can be made up of multiple solar cells. The cells use photovoltaics to convert solar irradiance to an electrical charge, which is used to generate current and/or voltage. To maximize the generated power, panel 202 should be directed to an angle matching the azimuth angle of the sun at each moment in time and thus maximizing the captured solar irradiation, which is achieved by mounting panel 202 on the panel support 100.

Shown in FIG. 2 are a pair of cross members 204, which can provide lateral rigidity or structural strength for support 100. While illustrated in an "X" configuration, parallel configurations or singular cross members are possible. In some implementations, no cross member is provided, and instead panel 202's structural integrity is relied upon for lateral stiffness.

In the illustrated implementation, T-links 102 are positioned inside I-links 104, that is, they are more toward the center of panel 202. This allows for connection of cross members 204 directly to T-links 102 without interference. In some implementations, T-links can be positioned outside I-links 104, and cross members 204 can be coupled to I-links 104, or panel support 110.

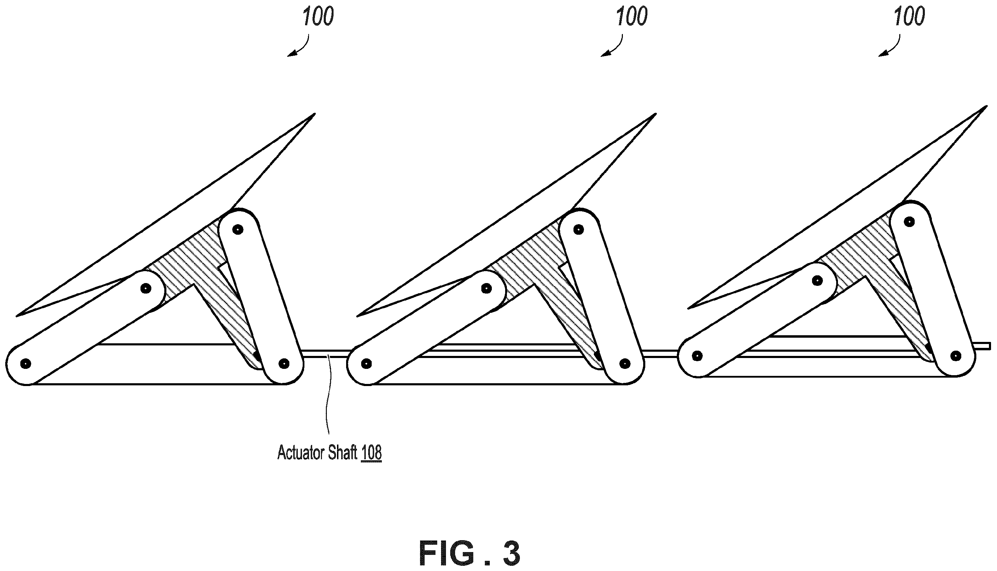

FIG. 3 illustrates an array of solar tracking supports operated by a single actuator shaft 108. In the illustrated example, multiple supports 100 are actuated using a single actuation shaft 108. This enables synchronized tracking amongst multiple supports with a single actuator. While many conventional solar arrays with panels mounted to a pivoting torque tube need to be arranged in North-South strings, the illustrated configuration allows control of panels in East-West strings, with the trackers still tracking from East to West. That is, in the illustrated configuration, the panels track along the same direction as the direction of travel of the actuator shaft. E.g., as the actuation shaft 108 translates East, the panels track West. This can be advantageous in situations where power or actuators are preferably arranged on either the East or West side of the array (as opposed to the North or South).

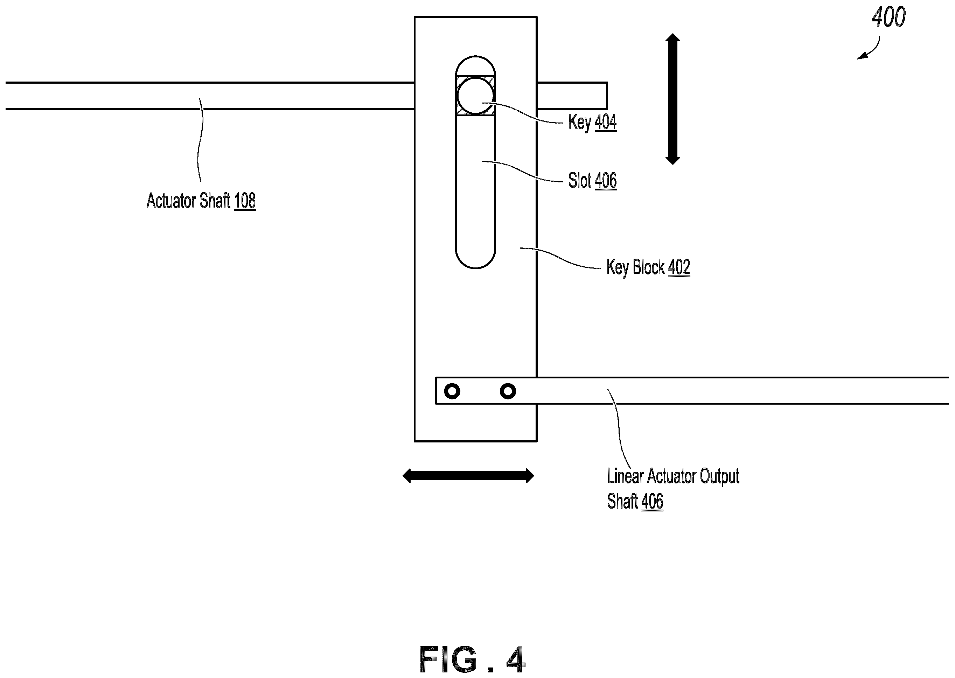

It should be noted that as actuation shaft 108 translates and panels track, the height of actuation shaft 108 will change as the T-links in the respective supports 100 pivot. Multiple solutions are available to accommodate this movement, as described below with respect to FIG. 4.

FIG. 4 illustrates an example key block and system 400 for transferring linear motion to a height adjustable actuator shaft. In FIG. 4, linear actuator output shaft 406 translates key block 402 left and right. A key 404 affixed to actuator shaft 108 engages with a slot 406 in key block 402 allowing actuator shaft 108 to translate vertically freely while transferring any horizontal motion of linear actuator output shaft 406 to actuator shaft 108. The key block 402 can generally be any block that is configured to enable motion of the actuator shaft 108 in one or more directions, while enabling force to be exerted in some other direction. For example, in the illustrated example, the key block 402 allows actuator shaft 108 to translate freely in the vertical direction, while transferring force from the linear actuator output shaft 406. Similarly the key 404 can be a structural feature that interface with the key block 402 and couples the actuator shaft 108 to the key block 402.

It should be noted that FIG. 4 is only an example solution, and other mechanical linkages such as, cams and cam followers, rack and pinion system, or another device can be used to actuate tracker 100.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

The foregoing description is provided in the context of one or more implementations. Various modifications, alterations, and permutations of the disclosed implementations can be made without departing from scope of the disclosure. Thus, the present disclosure is not intended to be limited only to the described or illustrated implementations but is to be accorded the widest scope consistent with the principles and features disclosed herein.

## Claims

1. A solar support comprising:
a base comprising a first end and a second end;
a first linking member coupled to the first end by a first revolute joint;
a second linking member coupled to the second end by a second revolute joint;
a T-linkage connected to the first and second linking members by third and fourth revolute joints respectively; and
a panel support affixed to the T-linkage and configured to receive and support a solar panel.

2. The support of claim 1, comprising:
an actuator shaft coupled to the T-linkage by a fifth revolute joint, the actuator shaft configured to translate relative to the base, wherein translating the actuator shaft pivots the T-linkage, causing the panel support to tilt.

3. The support of claim 2, wherein the actuator shaft is coupled to an actuator configured to translate the actuator shaft relative to the base.

4. The support of claim 2 or 3, wherein tilting the support panel causes a center point of the support panel to move away from the base.

5. The support of any preceding claim, wherein the revolute joints are pin joints, and wherein the revolute joints each comprise a bearing.

6. The support of any preceding claim, wherein the first and second linking members and T-linkage are formed of steel.

7. The support of any preceding claim, wherein the base is affixed to the ground.

8. The support of any preceding claim, comprising one or more cross members configured to provide lateral rigidity.
